(19) Europäisches Patentamt
European Patent Office
Office européen des brevets

(11) **EP 2 916 100 B1**

(12) **EUROPÄISCHE PATENTSCHRIFT**

(45) Veröffentlichungstag und Bekanntmachung des Hinweises auf die Patenterteilung:
**29.04.2020   Patentblatt 2020/18**

(51) Int Cl.:
**A63B 49/00** *(2015.01)*   **A63B 24/00** *(2006.01)*
**A63B 60/00** *(2015.01)*   **G01B 7/004** *(2006.01)*

(21) Anmeldenummer: **15157647.7**

(22) Anmeldetag: **04.03.2015**

(54) **TREFFPUNKTERKENNUNG**

HIT POINT DETECTION

IDENTIFICATION DE POINT D'IMPACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2014   DE 102014003353**

(43) Veröffentlichungstag der Anmeldung:
**09.09.2015   Patentblatt 2015/37**

(73) Patentinhaber: **Head Technology GmbH**
**6921 Kennelbach (AT)**

(72) Erfinder:
• **Schneider, Reinhard**
**6973 Höchst (AT)**
• **Mohr, Stefan**
**6850 Dornbirn (AT)**

(74) Vertreter: **Vossius & Partner**
**Patentanwälte Rechtsanwälte mbB**
**Siebertstrasse 3**
**81675 München (DE)**

(56) Entgegenhaltungen:
WO-A1-2013/069447   US-A- 5 757 266
US-A1- 2005 239 583   US-A1- 2007 105 664
US-A1- 2013 053 190

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Bestimmung mindestens einer Koordinate des Auftreffpunktes eines Balls auf der Bespannung eines Ballspielschlägers sowie einen Ballspielschläger, der dazu geeignet ist, ein solches Verfahren auszuführen.

Es ist schon lange bekannt, dass der Auftreffpunkt eines Balles auf der Bespannung eines Ballspielschlägers einen ganz entscheidenden Einfluss auf die Leistung und Effizienz eines Spielers hat. Wird der sogenannte "sweet spot" des Schlägers getroffen, so ist sowohl die Kraftübertragung vom Schläger bzw. von dessen Bespannung auf den Ball als auch die Kontrolle der Flugrichtung des Balles optimal. Es wurde daher bereits vor einiger Zeit versucht, Trainingsschläger bereitzustellen, mit deren Hilfe sich bestimmen oder überwachen lässt, ob der Ball diesen sweet spot getroffen hat. So beschreibt beispielsweise die DE 198 16 389 A1 einen Tennisschläger zum Trainieren der Treffgenauigkeit und zum Verbessern der Schlageffizienz, in dessen Bespannung ein Sensor integriert ist. Dieser Sensor gibt dann und nur dann ein Signal ab, wenn er vom Ball getroffen wird. Schlägt der Ball neben dem Sensor auf, wird kein Signal erzeugt. Auch die DE 29 425 33 A1 beschreibt einen Tennisschläger mit einem Treff-Signalgeber, durch den im Falle des Treffens des Tennisballs auf einen Zentralbereich der Bespannung ein Treffsignal erzeugt wird. Diese Tennisschläger haben jedoch den Nachteil, dass der Spieler lediglich ein qualitatives Signal (sweet spot getroffen oder sweet spot nicht getroffen) erhält, ohne jedoch Informationen zum tatsächlichen Auftreffpunkt des Balls auf der Bespannung zu bekommen. Die US 4,101,132 und US 4,257,594 stellen insofern einen verbesserten Tennisschläger bereit, als in diesem mehrere Zonen definiert sein können und mit Hilfe mehrerer Sensoren bestimmt werden kann, welche dieser Zonen vom Ball getroffen wurde. Auch diese Art Tennisschläger generiert jedoch lediglich ein diskretes Signal. Zudem wird dieser Tennisschläger mit zunehmender Anzahl von Zonen aufgrund der Vielzahl von notwendigen Sensoren technisch komplex und daher entsprechend teuer. Schließlich beschreibt die EP 0 377 614 B1 einen Tennisschläger mit einer Mehrzahl von Sensoreinrichtungen, die am Umfang der Bespannung angeordnet sind, um sich entlang der Bespannung ausbreitende Schockwellen zu detektieren, die verursacht werden, wenn der Ball die Bespannung trifft. Es werden dann jeweilige Zeitpunkte unterschieden, zu denen die Schockwellenschwingungen anfänglich von den jeweiligen Sensoreinrichtungen detektiert werden. Wenn die so ermittelten jeweiligen Zeitpunkte in einen vorbestimmten Referenzzeitrahmen fallen, der dem sweet spot entspricht, so wird signalisiert, dass der Tennisschläger im sweet spot getroffen worden ist. Wie man sich jedoch leicht klarmacht, erfordert ein solcher Tennisschläger eine extrem hohe Zeitauflösung, wenn der Auftreffpunkt des Balls zentimetergenau bestimmt werden soll. Entsprechend ist die notwendige Sensorik technisch hoch anspruchsvoll und daher teuer. WO 2013/069447 A1, US 2005/0239583 A1, US 2007/0105664 A1, US 2013/0053190 A1 und US 5 757 266 A offenbaren jeweils Ballspielschläger mit Sensoreinrichtungen.

Es ist daher eine Aufgabe der vorliegenden Erfindung, ein verbessertes Verfahren zur Bestimmung mindestens einer Koordinate des Auftreffpunkts eines Balls auf der Bespannung eines Ballspielschlägers bereitzustellen, das den oben diskutierten Nachteilen der aus dem Stand der Technik bekannten Verfahren Rechnung trägt. Es ist ferner eine Aufgabe der vorliegenden Erfindung, einen Ballspielschläger bereitzustellen, der geeignet ist, ein solches Verfahren durchzuführen. Diese Aufgaben werden mit einem Verfahren gemäß Anspruch 1 sowie durch einen Ballspielschläger gemäß Anspruch 13 gelöst. Bevorzugte Ausführungsformen der vorliegenden Erfindung sind in den abhängigen Ansprüchen beschrieben.

Die vorliegende Erfindung betrifft ein Verfahren zur Bestimmung einer ersten und einer zweiten Koordinate des Auftreffpunkts eines Balls auf der Bespannung eines Ballspielschlägers. Der Ballspielschläger hat einen Schlägerkopf und einen Griffabschnitt, wobei die Längsachse des Ballspielschlägers eine x-Koordinate definiert, die Querachse des Ballspielschlägers eine y-Koordinate definiert und die Senkrechte zur Bespannung eine z-Koordinate definiert. Gemäß der vorliegenden Erfindung wird eine erste kinematische Grundgröße entlang einer ersten Richtung als Funktion der Zeit an einem ersten Punkt des Ballspielschlägers gemessen und eine zweite kinematische Grundgröße entlang einer zweiten Richtung als Funktion der Zeit an einem zweiten Punkt des Ballspielschlägers gemessen. Bevorzugt beträgt die Messrate bei der Messung der ersten und/oder zweiten kinematischen Grundgröße mindestens 200 Hz. Die gemessene erste kinematische Grundgröße und die gemessene zweite kinematische Grundgröße werden in den Frequenzraum transformiert. Alternativ oder zusätzlich kann auch eine Linearkombination aus der gemessenen ersten kinematische Grundgröße und der gemessenen zweiten kinematischen Grundgröße in den Frequenzraum transformiert werden. Auf Basis der transformierten kinematischen Grundgröße(n) im Frequenzraum wird dann die erste und/oder zweite Koordinate des Auftreffpunkts ermittelt.

Die Transformation in den Frequenzraum kann mithilfe bekannter Techniken wie zum Beispiel der DFT, bevorzugt der FFT erfolgen. Bei der kinematischen Grundgröße kann es sich um die Geschwindigkeit, die Beschleunigung oder eine andere kinematische Grundgröße handeln. Die Messung erfolgt bevorzugt mit einem Beschleunigungssensor und/oder einem Gyrometer. Anstelle der tatsächlich gemessenen kinematischen Grundgröße kann auch eine daraus abgeleitete Größe transformiert werden. So kann beispielsweise die Geschwindigkeit gemessen werden, daraus die Beschleunigung abgeleitet werden und dann die Beschleunigung in den Frequenzraum transformiert werden und vice versa. Mit der ersten und zweiten Koordinate des Auftreffpunktes sind Koordinaten innerhalb der Ebene der Bespannung gemeint. Bevorzugt stehen die erste und zweite Koordinate senkrecht aufeinander. Besonders bevorzugt orientieren sich die erste und zweite Koordinate an der x-bzw. y-Koordinate.

Bevorzugt ist die erste Richtung im Wesentlichen mit der zweiten Richtung identisch. Dabei sind die erste und zweite Richtung besonders bevorzugt im Wesentlichen parallel zur z-Koordinate. Mit anderen Worten wird bevorzugt die Geschwindigkeit oder Beschleunigung senkrecht zur Bespannung des Ballspielschlägers gemessen.

Der erste Punkt des Ballspielschlägers kann mit dem zweiten Punkt des Ballspielschlägers identisch sein. So kann beispielsweise die erste kinematische Grundgröße und die zweite kinematische Grundgröße mit ein und demselben Sensor gemessen werden. Bevorzugt unterscheidet sich jedoch der erste Punkt von dem zweiten Punkt. Besonders bevorzugt ist dabei mindestens einer der beiden Punkte in Bezug auf die Längsachse des Ballspielschlägers nach außen versetzt.

Bevorzugt weist das Ermitteln der ersten und/oder zweiten Koordinate des Auftreffpunkts auf der Basis der transformierten kinematischen Grundgröße(n) im Frequenzraum die folgenden Schritte auf: Bestimmen eines charakteristischen Frequenzintervalls, Bestimmen mindestens eines charakteristischen Wertes der ersten und/oder zweiten kinematischen Grundgröße in Bezug auf das charakteristische Frequenzintervall, und Ermitteln der ersten und/oder zweite Koordinate des Auftreffpunkts auf der Basis des mindestens einen charakteristischen Wertes. Das charakteristische Frequenzintervall wird dabei bevorzugt vorab bestimmt bzw. festgelegt. Dabei liegt die Untergrenze des charakteristischen Frequenzintervalls bevorzugt zwischen 0 Hz und 100 Hz, stärker bevorzugt zwischen 10 Hz und 80 Hz und besonders bevorzugt zwischen 25 Hz und 75 Hz. Die Obergrenze des charakteristischen Frequenzintervalls liegt bevorzugt zwischen 50 Hz und 500 Hz, stärker bevorzugt zwischen 75 Hz und 400 Hz und besonders bevorzugt zwischen 100 Hz und 300 Hz. Gemäß dieser bevorzugten Ausführungsform des erfindungsgemäßen Verfahrens erfolgt die Bestimmung des Auftreffpunkts auf der Basis von relativ kleinen Frequenzen. Dementsprechend bedarf es für das erfindungsgemäße Verfahren keiner zeitlich hochaufgelösten Messung der kinematischen Grundgrößen. Das ermöglicht die Verwendung relativ einfacher Standardsensoren, die entsprechend günstig sind.

Bei dem charakteristischen Wert kann es sich bevorzugt um einen oder eine Kombination der folgenden Werte handeln: lokales oder absolutes Minimum der ersten und/oder zweiten kinematischen Grundgröße im charakteristischen Frequenzintervall, lokales oder absolutes Maximum der ersten und/oder zweiten kinematischen Grundgröße im charakteristischen Frequenzintervall, Mittelwert der ersten und/oder zweiten kinematischen Grundgröße im charakteristischen Frequenzintervall, Mittelwert der ersten und/oder zweiten kinematischen Grundgröße in einem Teilintervall des charakteristischen Frequenzintervalls. Erfindungsgemäß hat sich herausgestellt, dass der Auftreffpunkt des Balls auf der Bespannung des Ballspielschlägers eine charakteristische Signatur im Frequenzraum der jeweiligen kinematischen Grundgröße hinterlässt. Da sich diese Signatur unterschiedlich auswirken kann, ist die vorliegende Erfindung nicht auf bestimmte charakteristische Werte limitiert. Vielmehr lassen sich je nach Anordnung der Sensoren und Schwingungseigenschaften des Ballspielschlägers unterschiedliche charakteristische Werte definieren, die direkt mit dem Auftreffpunkt des Balls korreliert sind. Im Wesentlichen beruht die vorliegende Erfindung unter anderem auf dem Grundgedanken, dass das Frequenzspektrum auf unterschiedliche, aber bestimmte Weise mit dem Auftreffpunkt des Balls auf der Bespannung des Ballspielschlägers korreliert. Diese Korrelation lässt sich für jeden Ballspielschläger durch entsprechende Experimente finden. Ist eine solche Korrelation einmal bekannt, lässt sich durch Analyse des Spektrums im Frequenzraum bzw. durch Bestimmen eines bestimmten charakteristischen Wertes der kinematischen Grundgröße im Frequenzraum die erste und/oder zweite Koordinate des Auftreffpunkts ermitteln. Dies kann beispielsweise mithilfe einer Tabelle erfolgen, die bestimmten charakteristischen Werten jeweils einen bestimmten Ballauftreffpunkt zuordnet. Bevorzugt ist jedoch die erste und/oder zweite Koordinate eine Funktion eines oder mehrere charakteristischer Werte.

Gemäß einer bevorzugten Ausführungsform ist die erste Koordinate die x-Koordinate, die erste Richtung im Wesentlichen parallel zur z-Koordinate und der erste Punkt am Griffabschnitt vorgesehen. Gemäß einer weiteren bevorzugten Ausführungsform ist die erste Koordinate die y-Koordinate, die erste Richtung im Wesentlichen parallel zur z-Koordinate und der erste Punkt am Schlägerkopf vorgesehen. Gemäß einer weiteren bevorzugten Ausführungsform ist die erste Koordinate die x-Koordinate, die zweite Koordinate die y-Koordinate und die erste und zweite Richtung im Wesentlichen parallel zur z-Koordinate. Dabei ist bevorzugt der erste Punkt am Schlägerkopf oder am Griffabschnitt vorgesehen und der zweite Punkt am Schlägerkopf vorgesehen.

Die vorliegende Erfindung betrifft ferner einen Ballspielschläger mit mindestens einem ersten Sensor zum Messen mindestens einer ersten kinematischen Grundgröße und einer Prozessoreinheit, wobei der erste Sensor und die Prozessoreinheit dazu geeignet sind, das Verfahren wir oben beschrieben durchzuführen. Bevorzugt weist der Ballspielschläger ferner einen zweiten Sensor zum Messen mindestens einer zweiten kinematischen Grundgröße auf. Besonders bevorzugt ist der erste Sensor im oder am Schlägerkopf oder Griffabschnitt angebracht und der zweite Sensor im oder am Schlägerkopf angebracht.

Die vorliegende Erfindung betrifft ferner einen Ballspielschläger mit einem eine Bespannung aufnehmenden Schlägerkopf, einem Griffabschnitt, einem Beschleunigungssensor und einer Prozessoreinheit, die dazu geeignet ist, aus der vom Beschleunigungssensor gemessenen Beschleunigung in einer ersten Richtung eine Koordinate des Auftreffpunkts eines Balls auf die Bespannung des Schlägers zu ermitteln. Dabei ist der Beschleunigungssensor bevorzugt im oder am Griffabschnitt vorgesehen. Bevorzugt verläuft die erste Richtung entlang der Schlägerlängsachse. Bevorzugt weist der Ballspielschläger ferner einen zweiten Beschleunigungssensor auf, wobei die Prozessoreinheit dazu geeignet ist, aus der von beiden Beschleunigungssensoren gemessenen Beschleunigung in jeweils einer Richtung zwei Koordinaten des Auftreffpunkts eines Balls auf die Bespannung eines Schlägers zu ermitteln. Bevorzugt ist die Prozessoreinheit dazu geeignet, aus der vom Beschleunigungssensor gemessenen Beschleunigung in einer ersten Richtung zwei Koordinaten des Auftreffpunkts eines Balls auf die Bespannung des Schlägers zu ermitteln.

Bevorzugt weist der Ballspielschläger ferner ein Gyrometer auf, wobei die Prozessoreinheit dazu geeignet ist, aus der vom Gyrometer gemessenen Beschleunigung eine zweite Koordinate des Auftreffpunkts eines Balls auf die Bespannung des Schlägers zu ermitteln. Das Gyrometer ist dabei bevorzugt im oder am Griffabschnitt vorgesehen.

Nachfolgend werden bevorzugte Ausführungsformen der vorliegenden Erfindung mit Bezug auf die Figuren näher beschrieben. Es zeigen:

Fig. 1a-c    das Messergebnis eines Experiments;
Fig. 2    ein Flussdiagramm für einen beispielhaften Algorithmus zur Bestimmung der y-Koordinate; und
Fig. 3    ein Flussdiagramm für einen beispielhaften Algorithmus zur Bestimmung der x-Koordinate.

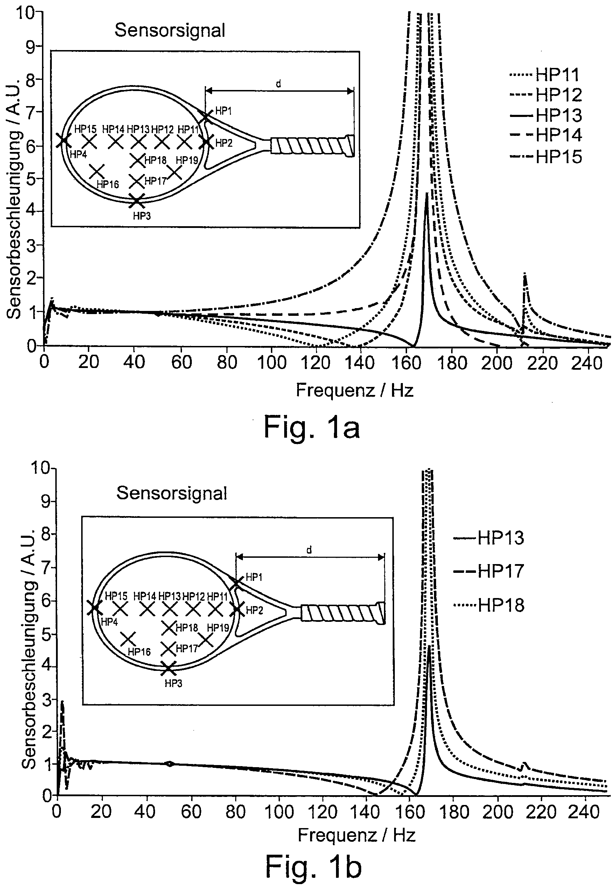

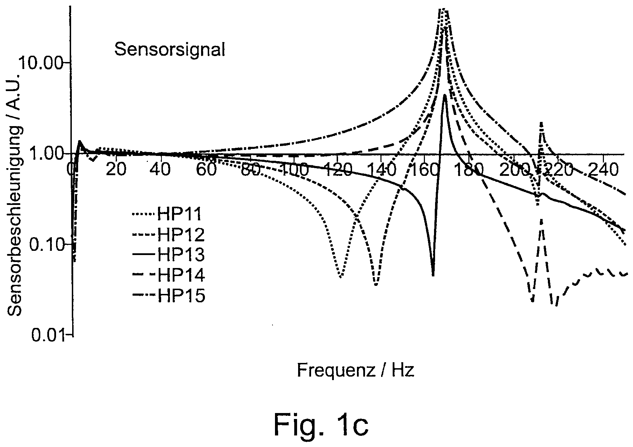

In den Figuren 1a bis 1c ist das Ergebnis eines Experiments dargestellt, anhand dessen beispielhaft erläutert werden soll, auf welchem Grundgedanken die vorliegende Erfindung beruht. In der in den Figuren 1a und 1b eingeblendeten Skizze ist schematisch ein Tennisschläger (bei dem hier diskutierten Experiment wurde das Model "Extreme MP" von Head verwendet) abgebildet, an dessen Schlägerkopf zwei Sensoren angebracht sind, deren Positionen schematisch durch ein Kreuz sowie die Bezeichnung HP1 und HP2 angedeutet sind. Bei den Sensoren handelt es sich um Beschleunigungssensoren des Typs "Bruel & Kjoer 4501". Die Bespannung des Tennisschlägers wurde an definierten Punkten mithilfe eines Hammers getroffen, wobei die Schlagkraft nicht relevant ist, da diese "herausnormiert" werden kann. Die Auftreffpunkte ("hitting points") des Hammers HP11 bis HP19 sind in der eingeblendeten Skizze in den Figuren 1a und 1b mithilfe von Kreuzen gekennzeichnet. Während des Aufpralls und im Anschluss daran wurde von den Sensoren an den Positionen HP1 und HP2 jeweils die Beschleunigung gemessen. Das Fourier-transformierte Signal des Sensors an der Position HP1 ist für die Auftreffpunkte HP11 bis HP15 in Figur 1a als Funktion der Frequenz dargestellt. Für die Auftreffpunkte HP13, HP17 und HP18 ist das entsprechende Signal in Fig. 1b dargestellt. Wie sich deutlich erkennen lässt, weichen die verschiedenen Kurven in Abhängigkeit des Auftreffpunkts deutlich in ihrer Form voneinander ab. So weisen beispielsweise alle Kurven ein Minimum auf, das in Abhängigkeit vom jeweiligen Auftreffpunkt bei deutlich unterschiedlichen Frequenzen auftritt. Im Falle einer logarithmischen Skalierung, wie sie für die Kurven der Fig. 1a in Fig. 1c abgebildet ist, sind diese Minima noch deutlicher ausgeprägt und es klar zu erkennen, wie sich das Minimum mit zunehmendem Abstand d des Auftreffpunkts vom Schlägergriff zu größeren Frequenzen verschiebt.

Die Idee der vorliegenden Erfindung basiert darauf, eine Korrelation zwischen der spezifischen Kurvenform im Frequenzraum und dem tatsächlichen Auftreffpunkt des Balls auf der Bespannung zur erstellen. Ist eine solche Korrelation empirisch gelungen, lässt sich durch Messen der Beschleunigung und Transformation des Messsignals in den Frequenzraum auf einfache Weise der Auftreffpunkt des Balls bestimmen. Wie aus dem Beispiel der Figur 1 deutlich wird, lassen sich hierfür grundsätzlich verschiedene charakteristische Werte festlegen, auf Basis derer dann die Zuordnung erfolgen kann. So unterscheiden sich die Kurven in Figur 1 nicht nur durch die Position ihres Minimums voneinander, sondern beispielsweise auch durch ein unterschiedlich stark ausgeprägtes Maximum oder durch unterschiedliche Amplituden bei beispielsweise 120 Hz. Daher sei betont, dass die nachfolgend näher beschriebenen Ausführungsbeispiele spezifischer Algorithmen zur Bestimmung der x- und/oder y-Koordinate des Auftreffpunkts lediglich bevorzugte Ausführungsformen darstellen, die jedoch nicht limitierend zu verstehen sind. Vielmehr lassen sich auch andere Charakteristika der verschiedenen Kurven im Frequenzraum ermitteln, mithilfe derer auf die Position des Auftreffpunkts zurückgeschlossen werden kann.

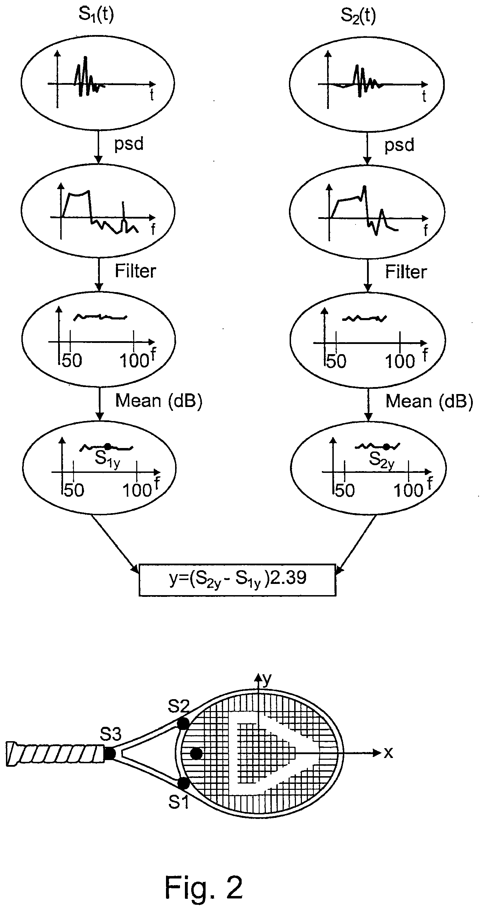

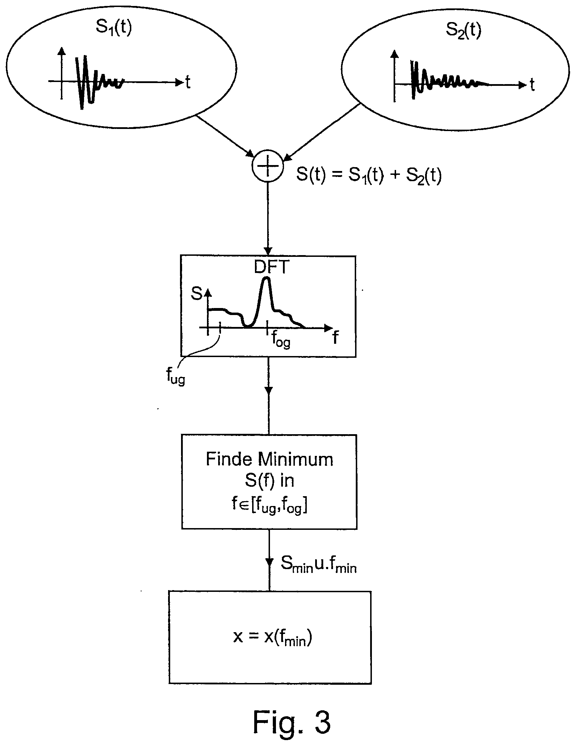

In den Figuren 2 und 3 ist ein spezielles Ausführungsbeispiel für ein erfindungsgemäßes Verfahren zur Bestimmung einer x-Koordinate sowie einer y-Koordinate dargestellt. In der eingeblendeten Skizze von Figur 2 ist schematisch ein Ballspielschläger mit einer Definition der x- bzw. y-Koordinate dargestellt, wobei der Ursprung des Koordinatensystems durch den Flächenschwerpunkt der Bespannung gebildet wird. An einer oder mehrerer der Positionen $S_1$, $S_2$ und $S_3$ kann sich jeweils ein Beschleunigungssensor befinden. Für das hier diskutierte Ausführungsbeispiel ist der Beschleunigungssensor $S_3$ jedoch nicht erforderlich. Es bedarf lediglich der beiden Beschleunigungssensoren $S_1$ und $S_2$,

die bevorzugt an den beiden Armen bzw. jeweils am Übergang vom Arm zur Brücke angebracht sind. Bevorzugt messen die Beschleunigungssensoren $S_1$ und $S_2$ über einen Zeitraum von bevorzugt 2 s mit einer Messrate von bevorzugt 10.000 $s^{-1}$ die Beschleunigung entlang der z-Richtung, das heißt senkrecht zur x- und y-Koordinate. Das gemessene Signal der Beschleunigung als Funktion der Zeit der beiden Sensoren $S_1$ und $S_2$ ist in den Figuren 2 und 3 jeweils schematisch als $S_1(t)$ bzw. $S_2(t)$ dargestellt. Figur 2 enthält ein bevorzugtes Flussdiagramm zur Bestimmung der y-Koordinate, wohingegen Figur 3 ein bevorzugtes Flussdiagramm zur Bestimmung der x-Koordinate enthält.

Bei der in Figur 2 beispielhaft dargestellten Bestimmung der y-Koordinate wird zunächst die spektrale Leistungsdichte (psd) der gemessenen Signale $S_1(t)$ und $S_2(t)$ ermittelt. Mit anderen Worten erfolgt eine Transformation der gemessenen kinematischen Grundgröße in den Frequenzraum. Hierbei kann beispielsweise eine diskrete Fourier-Transformation wie zum Beispiel FFT (fast Fourier transformation) zum Einsatz kommen. Das transformierte Signal wird anschließend jeweils gefiltert. Die Filterung kann mithilfe bekannter Techniken wie zum Beispiel einem digitalen Bandpassfilter (z.B. Butterwerth-Filter dritter Ordnung) erfolgen. Anschließend wird bezogen auf ein charakteristisches Frequenzintervall jeweils ein charakteristischer Wert des transformierten Signals ermittelt. Im dargestellten Ausführungsbeispiel ist das charakteristische Frequenzintervall [50 Hz, 100 Hz] und der charakteristische Wert der Mittelwert der transformierten Funktion in diesem Frequenzintervall. Werden die so bestimmten Mittelwerte der Sensoren $S_1$ und $S_2$ als $S_{1y}$ bzw. $S_{2y}$ bezeichnet, so lässt sich die y-Koordinate des Auftreffpunkts mithilfe der folgenden Formel bestimmen, wobei die Werte von $S_{1y}$ bzw. $S_{2y}$ in der Einheit $m/s^2$ einzugeben sind und das Resultat die y-Koordinate in cm angibt:

$$y = (S_{2y}\text{-}S_{1y})\,2.39$$

Diese Formel wurde heuristisch für einen bestimmten Tennisschläger ermittelt. Bei einem anderen Schlägertyp können die einzelnen Zahlenwerte der obigen Formel deutlich von dem hier diskutierten Ausführungsbeispiel abweichen. Ferner kann es bei einem anderen Schlägertyp von Vorteil sein, ein anderes charakteristisches Frequenzintervall und/oder einen anderen charakteristischen Wert zu bestimmen.

In Figur 3 ist der korrespondierende Algorithmus zur beispielhaften Bestimmung der x-Koordinate in einem Flussdiagramm dargestellt. Bei dem vorliegenden Ausführungsbeispiel werden zunächst die beiden Messsignale $S_1(t)$ und $S_2(t)$ der Sensoren $S_1$ und $S_2$ addiert und das somit erhaltene Signal S(t) mithilfe beispielsweise einer diskreten Fourier-Transformation (DFT) in eine spektrale Leistungsdichte S(f) überführt. Anschließend wird eine obere Grenzfrequenz $f_{og}$ sowie eine untere Grenzfrequenz $f_{ug}$ des charakteristischen Frequenzintervalls $[f_{ug}, f_{og}]$ bestimmt. Bevorzugt ist das Intervall [10 Hz, 200 Hz]. Auf diesem charakteristischen Frequenzintervall wird dann das Minimum von S(f) und die zugehörige Frequenz $f_{min}$ ermittelt. Die x-Koordinate ist dann eine Funktion der zugehörigen Minimalfrequenz $f_{min}$: x = $x(f_{min})$. In einem bevorzugten Ausführungsbeispiel lässt sich die x-Koordinate des Auftreffpunkts mithilfe der folgenden Formel bestimmen, wobei die Frequenzwerte in der Einheit Hz anzugeben sind und das Resultat die x-Koordinate in cm angibt:

$$x = (f_{min}\text{ -}150)/5.7,\text{ falls } f_{min} < 170$$

$$x = (f_{min}\text{ -}210)/10,\text{ falls } f_{min} > 170$$

Alternativ kann die x-Koordinate auch eine Funktion der Minimalfrequenz sowie der beiden Frequenzen des charakteristischen Frequenzintervalls sein:

$$x = x(f_{min}, f_{ug}, f_{og})$$

Wie bereits mehrfach erläutert, handelt es sich bei diesen beiden Ausführungsbeispielen um spezielle Beispiele, die keinesfalls als limitierend angesehen werden sollten. Vielmehr soll mithilfe dieses Beispiels lediglich dargelegt werden, dass das Auffinden eines präzisen Algorithmus, der einer kinematischen Grundgröße im Frequenzraum eine Koordinate des Auftreffpunkts zuordnet, funktioniert. Grundsätzlich kann dieser Algorithmus jedoch in vielfacher Hinsicht abgewandelt werden und an konkrete Schlägergeometrien empirisch angepasst werden.

**Patentansprüche**

1. Verfahren zur Bestimmung einer ersten und zweiten Koordinate des Auftreffpunktes eines Balls auf der Bespannung eines Ballspielschlägers mit einem Schlägerkopf und einem Griffabschnitt, wobei die Längsachse des Ballspielschlägers eine x-Koordinate definiert, die Querachse des Ballspielschlägers eine y-Koordinate definiert und die Senkrechte zur Bespannung eine z-Koordinate definiert, mit den folgenden Schritten:

a) Messen einer ersten kinematischen Grundgröße in einer ersten Richtung als Funktion der Zeit an einem ersten Punkt des Ballspielschlägers;
b) Messen einer zweiten kinematischen Grundgröße in einer zweiten Richtung als Funktion der Zeit an einem zweiten Punkt des Ballspielschlägers;

c) Transformation der gemessenen ersten kinematischen Grundgröße und der gemessenen zweiten kinematischen Grundgröße und/oder einer Linearkombination der gemessenen ersten und zweiten kinematischen Grundgröße in den Frequenzraum; und

d) Ermitteln der ersten und zweiten Koordinate des Auftreffpunkts auf der Basis der transformierten kinematischen Grundgröße(n) im Frequenzraum.

2. Verfahren nach Anspruch 1, wobei die erste Richtung im Wesentlichen mit der zweiten Richtung identisch ist.

3. Verfahren nach Anspruch 1 oder 2, wobei sich der erste Punkt von dem zweiten Punkt unterscheidet.

4. Verfahren nach einem der vorhergehenden Ansprüche, wobei das Messen der ersten und/oder zweiten kinematischen Grundgröße mit einer Messrate von mindestens 200 Hz erfolgt.

5. Verfahren nach einem der vorhergehenden Ansprüche, wobei das Ermitteln der ersten und/oder zweiten Koordinate des Auftreffpunkts auf der Basis der transformierten kinematischen Grundgröße(n) im Frequenzraum aufweist:

   a) Bestimmen eines charakteristischen Frequenzintervalls;
   b) Bestimmen mindestens eines charakteristischen Wertes der ersten und/oder zweiten kinematischen Grundgröße in Bezug auf das charakteristische Frequenzintervall; und
   c) Ermitteln der ersten und/oder zweiten Koordinate des Auftreffpunkts auf der Basis des mindestens einen charakteristischen Wertes.

6. Verfahren nach Anspruch 5, wobei die Untergrenze des charakteristischen Frequenzintervalls zwischen 0 Hz und 100 Hz, bevorzugt zwischen 10 Hz und 80 Hz und besonders bevorzugt zwischen 25 Hz und 75 Hz liegt.

7. Verfahren nach Anspruch 5 oder 6, wobei die Obergrenze des charakteristischen Frequenzintervalls zwischen 50 Hz und 500 Hz, bevorzugt zwischen 75 Hz und 400 Hz und besonders bevorzugt zwischen 100 Hz und 300 Hz liegt.

8. Verfahren nach einem der Ansprüche 5-7, wobei der charakteristische Wert einen oder eine Kombination der folgenden Werte aufweist: lokales oder absolutes Minimum der ersten und/oder zweiten kinematischen Grundgröße im charakteristischen Frequenzintervall, lokales oder absolutes Maximum der ersten und/oder zweiten kinematischen Grundgröße im charakteristischen Frequenzintervall, Mittelwert der ersten und/oder zweiten kinematischen Grundgröße im charakteristischen Frequenzintervall, Mittelwert der ersten und/oder zweiten kinematischen Grundgröße in einem Teilintervall des charakteristischen Frequenzintervalls.

9. Verfahren nach einem der Ansprüche 5-8, wobei die erste und/oder zweite Koordinate eine Funktion des charakteristischen Wertes ist.

10. Verfahren nach einem der vorhergehenden Ansprüche, wobei die erste Koordinate die x-Koordinate ist, die erste Richtung im Wesentlichen parallel zur z-Koordinate ist und der erste Punkt am Griffabschnitt vorgesehen ist.

11. Verfahren nach einem der Ansprüche 1-9, wobei die erste Koordinate die y-Koordinate ist, die erste Richtung im Wesentlichen parallel zur z-Koordinate ist und der erste Punkt am Schlägerkopf vorgesehen ist.

12. Verfahren nach einem der Ansprüche 1-9, wobei die erste Koordinate die x-Koordinate ist, die zweite Koordinate die y-Koordinate ist und die erste und zweite Richtung im Wesentlichen parallel zur z-Koordinate ist, wobei bevorzugt der erste Punkt am Schlägerkopf oder am Griffabschnitt vorgesehen ist und der zweite Punkt am Schlägerkopf vorgesehen ist.

13. Ballspielschläger mit einem Schlägerkopf, einem Griffabschnitt, mindestens einem ersten Sensor zum Messen mindestens einer ersten kinematischen Grundgröße und mindestens einem zweiten Sensor zum Messen mindestens einer zweiten kinematischen Grundgröße sowie einer Prozessoreinheit, wobei der erste und zweite Sensor sowie die Prozessoreinheit dazu geeignet sind, das Verfahren nach einem der vorhergehenden Ansprüche durchzuführen.

14. Ballspielschläger nach Anspruch 13, wobei der erste Sensor im oder am Schlägerkopf oder Griffabschnitt angebracht ist und wobei der zweite Sensor im oder am Schlägerkopf angebracht ist.

## Claims

1. A process for determining a first and a second coordinate of the point of contact of a ball on the strings of a ball game racquet with a racquet head and a handle section, wherein the longitudinal axis of the ball game racquet defines an x-coordinate, the transverse axis of the ball game racquet defines a y-coordinate, and the line perpendicular to the strings defines a z-coordinate, comprising the following steps:

   a) measuring a first kinematic basic parameter in a first direction as a function of time at a first point of the ball game racquet;
   b) measuring a second kinematic basic parameter in a second direction as a function of time at a second point of the ball game racquet;
   c) transforming the measured first kinematic basic parameter and the measured second kinematic basic parameter and/or a linear combination of the measured first and second basic parameters into the frequency domain; and
   d) calculating the first and second coordinates of the point of contact on the basis of the transformed kinematic basic parameter(s) in the frequency domain.

2. The process according to claim 1, wherein the first direction is essentially identical to the second direction.

3. The process according to claim 1 or 2, wherein the first point is different from the second point.

4. The process according to any of the preceding claims, wherein the measuring of the first and/or second kinematic basic parameter is carried out at a measurement rate of at least 200 Hz.

5. The process according to any of the preceding claims, wherein the determination of the first and/or second coordinate of the point of contact on the basis of the transformed kinematic basic parameter(s) in the frequency domain comprises:

   a) determining a characteristic frequency interval;
   b) determining at least one characteristic value of the first and/or second kinematic basic parameter with respect to the characteristic frequency interval; and
   c) calculating the first and/or second coordinate of the point of contact on the basis of the at least one characteristic value.

6. The process according to claim 5, wherein the lower limit of the characteristic frequency interval is between 0 Hz and 100 Hz, preferably between 10 Hz and 80 Hz and particularly preferably between 25 Hz and 75 Hz.

7. The process according to claim 5 or 6, wherein the upper limit of the characteristic frequency interval is between 50 Hz and 500 Hz, preferably between 75 Hz and 400 Hz and particularly preferably between 100 Hz and 300 Hz.

8. The process according to any of claims 5 to 7, wherein the characteristic value comprises one or a combination of the following values: local or absolute minimum of the first and/or second kinematic basic parameter in the characteristic frequency interval, local or absolute maximum of the first and/or second kinematic basic parameter in the characteristic frequency interval, mean value of the first and/or second kinematic basic parameter in the characteristic frequency interval, mean value of the first and/or second kinematic basic parameter in a subinterval of the characteristic frequency interval.

9. The process according to any of claims 5 to 8, wherein the first and/or second coordinate is a function of the characteristic value.

10. The process according to any of the preceding claims, wherein the first coordinate is the x-coordinate, the first direction is essentially parallel to the z-coordinate, and the first point is provided at the handle section.

11. The process according to any of claims 1 to 9, wherein the first coordinate is the y-coordinate, the first direction is essentially parallel to the z-coordinate, and the first point is provided at the racquet head.

12. The process according to any of claims 1 to 9, wherein the first coordinate is the x-coordinate, the second coordinate is the y-coordinate, and the first and second directions are essentially parallel to the z-coordinate, wherein preferably the first point is provided at the racquet head or the handle section and the second point is provided at the racquet head.

13. A ball game racquet comprising a racquet head, a handle section, at least one first sensor for measuring at least one first kinematic basic parameter and at least one second sensor for measuring at least one second kinematic basic parameter as well as a processing unit, wherein the first and second sensors as well as the processing unit are suitable for carrying out the process according to any of the preceding claims.

14. The ball game racquet according to claim 13, wherein the first sensor is provided in or at the racquet head or handle section and wherein the second sensor is provided in or at the racquet head.

**Revendications**

1. Procédé de détermination d'une première et deuxième coordonnée du point d'impact d'une balle sur le cordage d'une raquette pour jeu de balle avec une tête de raquette et une partie manche, dans lequel l'axe longitudinal de la raquette pour jeu de balle définit une coordonnée x, l'axe transversal de la raquette pour jeu de balle définit une coordonnée y et la perpendiculaire au cordage définit une coordonnée z, avec les étapes suivantes :

a) la mesure d'une première grandeur de base cinématique dans une première direction en fonction du temps en un premier point de la raquette pour jeu de balle ;
b) la mesure d'une deuxième grandeur de base cinématique dans une deuxième direction en fonction du temps en un deuxième point de la raquette pour jeu de balle ;
c) la transformation de la première grandeur de base cinématique mesurée et de la deuxième grandeur de base cinématique mesurée et/ou d'une combinaison linéaire de la première et deuxième grandeur de base cinématique mesurée dans l'espace fréquentiel ; et
d) la détermination de la première et deuxième coordonnée du point d'impact sur la base de la (des) grandeur(s) de base cinématique(s) transformée(s) dans l'espace fréquentiel.

2. Procédé selon la revendication 1, dans lequel la première direction est sensiblement identique à la deuxième direction.

3. Procédé selon la revendication 1 ou 2, dans lequel le premier point se distingue du deuxième point.

4. Procédé selon l'une quelconque des revendications précédentes, dans lequel la mesure de la première et/ou deuxième grandeur de base cinématique s'effectue avec une fréquence de mesure d'au moins 200 Hz.

5. Procédé selon l'une quelconque des revendications précédentes, dans lequel la détermination de la première et/ou deuxième coordonnée du point d'impact sur la base de la (des) grandeur(s) de base cinématique(s) transformée(s) dans l'espace fréquentiel présente :

a) la détermination d'un intervalle de fréquence caractéristique ;
b) la détermination d'au moins une valeur caractéristique de la première et/ou deuxième grandeur de base cinématique par rapport à l'intervalle de fréquence caractéristique ; et
c) la détermination de la première et/ou deuxième cordonnée du point d'impact sur la base de l'au moins une valeur caractéristique.

6. Procédé selon la revendication 5, dans lequel la limite inférieure de l'intervalle de fréquence caractéristique est comprise entre 0 Hz et 100 Hz, de préférence entre 10 Hz et 80 Hz et de manière particulièrement préférée entre 25 Hz et 75 Hz.

7. Procédé selon la revendication 5 ou 6, dans lequel la limite supérieure de l'intervalle de fréquence caractéristique est comprise entre 50 Hz et 500 Hz, de préférence entre 75 Hz et 400 Hz et de manière particulièrement préférée entre 100 Hz et 300 Hz.

8. Procédé selon l'une quelconque des revendications 5-7, dans lequel la valeur caractéristique présente une ou une combinaison des valeurs suivantes : un minimum local ou absolu de la première et/ou deuxième grandeur de base cinématique dans l'intervalle de fréquence caractéristique, un maximum local ou absolu de la première et/ou deuxième grandeur de base cinématique dans l'intervalle de fréquence caractéristique, une valeur moyenne de la première et/ou deuxième grandeur de base cinématique dans l'intervalle de fréquence caractéristique, une valeur moyenne de la première et/ou deuxième grandeur de base cinématique dans un intervalle partiel de l'intervalle de fréquence caractéristique.

9. Procédé selon l'une quelconque des revendications 5-8, dans lequel la première et/ou deuxième coordonnée est une fonction de la valeur caractéristique.

10. Procédé selon l'une quelconque des revendications précédentes, dans lequel la première coordonnée est la coordonnée x, la première direction est sensiblement parallèle à la coordonnée z et le premier point est prévu sur la partie manche.

11. Procédé selon l'une quelconque des revendications 1-9, dans lequel la première coordonnée est la coordonnée y, la première direction est sensiblement parallèle à la coordonnée z et le premier point est prévu sur la tête de raquette.

12. Procédé selon l'une quelconque des revendications 1-9, dans lequel la première coordonnée est la coordonnée x, la deuxième coordonnée est la coordonnée y et la première et deuxième direction est sensiblement parallèle à la coordonnée z, dans lequel de préférence le premier point est prévu sur la tête de raquette ou sur la partie manche et le deuxième point est prévu sur la tête de raquette.

13. Raquette pour jeu de balle avec une tête de raquette, une partie manche, au moins un premier capteur destiné à mesurer au moins une première grandeur de base cinématique et au moins un deuxième capteur destiné à mesurer au moins une deuxième grandeur de base cinématique ainsi qu'une unité processeur, dans laquelle le premier et deuxième capteur ainsi que l'unité processeur sont adaptés à mettre en œuvre le procédé selon l'une quelconque des revendications précédentes.

14. Raquette pour jeu de balle selon la revendication 13, dans laquelle le premier capteur est monté dans ou sur la tête de raquette ou partie de manche et dans laquelle le deuxième capteur est monté dans ou sur la tête de raquette.

Fig. 1a

Fig. 1b

Fig. 1c

$$y=(S_{2y}-S_{1y})2.39$$

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19816389 A1
- DE 2942533 A1
- US 4101132 A
- US 4257594 A
- EP 0377614 B1
- WO 2013069447 A1
- US 20050239583 A1
- US 20070105664 A1
- US 20130053190 A1
- US 5757266 A